(19) Europäisches Patentamt
European Patent Office
Office européen des brevets

(11) Publication number: **0 010 918**
**B1**

(12) **EUROPEAN PATENT SPECIFICATION**

(45) Date of publication of patent specification: **13.04.83**

(51) Int. Cl.³: **C 09 K 5/00**, C 23 F 11/00

(21) Application number: **79302302.9**

(22) Date of filing: **23.10.79**

(54) **Antifreeze agents.**

(30) Priority: **03.11.78 GB 4313578**

(43) Date of publication of application:
**14.05.80 Bulletin 80/10**

(45) Publication of the grant of the patent:
**13.04.83 Bulletin 83/15**

(84) Designated Contracting States:
**AT BE DE FR IT NL SE**

(56) References cited:
**FR - A - 1 185 008**
**FR - A - 1 343 624**
**GB - A - 945 638**
**US - A - 2 173 689**
**US - A - 4 149 985**

**CORROSION, vol. 15, no. 8, August 1959, National Association of Corrosion Engineers, Houston (US) N.S. DEMPSTER: "Corrosion of Aluminium Alloy in Glycol-Water Cooling Systems", page 395t—398t**

(73) Proprietor: **Smiths Industries Public Limited Company**
**765, Finchley Road**
**London, NW11 8DS (GB)**

(72) Inventor: **Venn, Bernard Robert**
**39 Casseldon Road**
**London, N.W.10 (GB)**
Inventor: **Spooner, Dennis Alan**
**56 Rofant Road**
**Northwood, Middlesex (GB)**
Inventor: **Bell, Alton Patrick**
**100 Leghorn Road**
**Harlesden, London, NW10 4PG (GB)**
Inventor: **Cliffe, Stephen George Rogers**
**14B Second Avenue**
**Hendon, London, N.W.4 (GB)**

(74) Representative: **Eyles, Christopher Thomas et al, BATCHELLOR, KIRK & EYLES 2 Pear Tree Court**
**Farringdon Road**
**London, EC1R 0DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 010 918 B1**

Courier Press, Leamington Spa, England

Antifreeze agents

This invention relates to antifreeze agents.

It is common practice to mix with the cooling water of an internal combustion engine an antifreeze agent in order to depress the freezing point of the water and hence protect the engine against the effects of cold weather. It is also known to add antifreeze agents to the circulating water of central heating systems, particularly when the premises in which such systems are installed may be left vacant in winter.

Such antifreeze agents conventionally comprise an alcoholic component, such as ethylene glycol, diethylene glycol, propylene glycol, dipropylene glycol, butylene glycol, methanol or a mixture of two or more of these. Since in time, acidic components may arise in the coolant, possible due to oxidation of the alcoholic component or, in the case of an engine, due to seepage of exhaust gases through a leak, it is conventional practice to incorporate in an antifreeze agent one or more corrosion inhibitors in order to protect the different metals with which the coolant may come into contact.

Engine blocks and cylinder heads, although formerly made almost exclusively from cast iron, may alternatively be made from aluminium or an aluminium alloy. For the sake of convenience it is preferred to formulate an antifreeze agent so that it is suitable for use both with cast iron and with aluminium engine heads and/or blocks. Radiators are conventionally made from copper, copper alloy, or aluminium alloy components soldered, glued or welded together. Other metallic parts with which an engine coolant may come into contact include water pumps and thermostatic valves. An antifreeze agent is therefore usually formulated with a view to providing, not only "reserve alkalinity" to provide a buffering effect against acidic substances, but also corrosion protection to the metallic materials most commonly used in engine manufacture, viz., iron, steel, cast aluminium, brass, solder and copper.

Amongst corrosion inhibitors that have previously been suggested there may be mentioned borax, sodium mercaptobenzothiazole, sodium silicate, potassium or sodium phenylaminoacetate, alkaline earth metal borates, triethanolamine, alkali metal and ammonium salts of phosphoric acid and of polycondensed phosphoric acids, benzotriazole, alkali metal aresenites, alkali metal arsenates, alkali metal molybdates, alkali metal tungstates, aliphatic, alcicyclic or heterocyclic amines, sodium carbonate, sodium nitrate, sodium nitrite, and sodium benzoate. Such inhibitors are conventionally used in a combination of one to three, sometimes even more than three, compounds to prevent corrosion by antifreeze agents, but they still do not act entirely satisfactorily. For example the presence of calcium ions in the water may lead to precipitation of insoluble salts when the antifreeze agent contains phosphate, arsenate, molybdate or tungstate ions; such insoluble calcium salts may lead to blockages in the cooling system. Although polyphosphates can be added to solubilise calcium ions, they hydrolyse and lose their activity. Amines attack copper and its alloys so sodium mercaptobenzothiazole may be added to stop this. However, such antifreeze agents have unfavourable ageing characteristics and may throw down precipitates on storage.

The specifications of three typical types of approved antifreeze agent are laid down in the following British Standards: BS3150:1959, BS3151:1959 and BS3152:1959.

It is known to the expert in the art that weaknesses of individual inhibitors cannot be obviated solely by accumulating corrosion inhibitors, but that it is often the case that good properties already achieved are lost again upon the addition of further components. It is particularly difficult to develop an inhibitor combination that will give good results under varying conditions and not only with a single test and with only one kind of water. Moreover, although reserve alkalinity can be increased by increasing the amounts of such inhibitors as borates or sodium carbonate, it is considered undesirable to incorporate more than about 5% by weight of solids in the antifreeze agent lest undesirable quantities of solids should build up in a cooling system on evaporation, for example by reason of engine overheating. At least one vehicle manufacturer specifies today that, in order to qualify for approval for use in its engines, an antifreeze agent must have a reserve alkalinity of at least 15 and a solids content of not more than 5% by weight, based on the weight of the alcohol component.

It is known from Example 3 of FR-A- 1343624 to formulate an anti-freeze agent containing a metasilicate salt, more specifically sodium metasilicate of formula $Na_2SiO_3.5\ H_2O$, an *alpha beta*-ethylenically unsaturated compound, more specifically cinnamaldehyde, a salt of boric acid, more specifically borax of the formula $Na_2B_4O_7.10H_2O$, a heterocyclic copper corrosion inhibitor more specifically mercaptobenzothiazole, and sufficient of an alkaline hydroxide, more specifically sodium hydroxide, to adjust the pH of aqueous solutions of the antifreeze agent to a value in the range between 7 and 8.5. Not only does such an antifreeze agent contain mercaptobenzothiazole and hence suffers disadvantages attendant upon the use thereof, as pointed out above, but also it contains the relatively volatile and smelly compound cinnamaldehyde.

GBA- 945638 teaches preparation of aqueous antifreeze agents containing borax, sodium nitrate, sodium nitrite, sodium silicate, sodium benzoate and benzotriazole. It is found in practice that such antifreeze agents have a relatively low "reserve alkalinity", usually not exceeding about 10.

According to the present invention we provide an antifreeze agent comprising a water-soluble alcohol component, a metasilicate salt, an *alpha, beta-* ethylenically unsaturated compound, a salt of

boric acid, a heterocyclic copper corrosion inhibitor, and an alkaline material *characterised in that* it contains the following percentages by weight (all with reference to the alcohol component) of the following substances:

(a) 0.02 to 1% alkali metal or ammonium metasilicate (calculated as penta-hydrate);

(b) 0.3 to 2% alkali metal salt or ammonium salt of an aromatic substituted, *alpha, beta*-ethylenically unsaturated carboxylic acid;

(c) 0.5 to 3% alkali metal or ammonium salt of boric acid;

(d) 0 to 0.5% alkali metal or ammonium hydroxide;

(e) 0.05 to 0.15% polycyclic heterocyclic copper corrosion inhibitor of the general formula

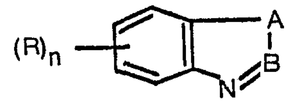
(I)

in which R is selected from alkyl, alkoxy, and nitro, n is 0,1,2,3, or 4, A represents —O—. —NH— or —NR′—, R′ represents optionally substituted alkyl, and B represents =CH— or =N—,

(f) 0.05 to 0.3% alkali metal or ammonium nitrite and

(g) 0 to 1% alkali metal or ammonium nitrate and that the amounts of components (c) and (d) are selected so that the pH of a 25 wt% solution in water of the antifreeze agent lies in the range of from 7.5 to 8.5. Throughout this specification, except where otherwise specified, all percentages are by weight.

Preferably the alkali metal in the salts is sodium since sodium compounds are generally cheaper than the corresponding compounds of other alkali metals. Other alkali metals that can be mentioned include lithium and potassium.

In addition to the listed essential and optional ingredients, the antifreeze agent may include one or more of the following further ingredients:

A minor amount (e.g. about 0.1% or less) of an amine or amino acid, e.g., phenylglycine;

a minor amount of sodium benzoate;

a minor amount of a dye, e.g., sodium fluorescein;

a minor amount of antifoam agent.

The alcohol component may be any alcohol component conventionally used in antifreeze agents. It may be for example, ethylene glycol, diethylene glycol, propylene glycol, dipropylene glycol, butylene glycol, methanol or a mixture of two or more thereof. It is preferred to avoid the use of methanol. Typically the alcohol component is ethylene glycol.

Preferably the antifreeze agent contains from 0.1 to 0.3% alkali metal or ammonium metasilicate, based on the weight of the alcohol component, calculated as pentahydrate. The preferred metasilicate is sodium metasilicate. It is not necessary that the substance added to the antifreeze agent be a metasilicate; other forms of silicate can be utilised, provided that an appropriate quantity of alkali is added to adjust the Si:O ratio to 1:3. It is furthermore not necessary that sodium metasilicate be added as the pentahydrate; a corresponding amount of the anhydrous form or the nonahydrate or a mixture thereof or with the pentahydrate can be used instead.

As aromatic substituted *alpha, beta*- ethylenically unsaturated carboxylic acids, there can be mentioned, for example, acids containing one or more phenyl groups which can be substituted, for example by one or more alkyl (e.g., methyl or ethyl), nitro, or alkoxy (e.g. methoxy or ethoxy) groups. Typical such acids include cinnamic acid, beta-naphthylacrylic acid, *p*-methoxycinnamic acids, *p*-methylcinnamic acid, *o*-nitrocinnamic acid, *m*-methoxy cinnamic acid, beta-phenylcrotonic acid and the like.

The preferred aromatic substituted, *alpha, beta*- ethylenically unsaturated carboxylic acid is cinnamic acid. This can be added to the antifreeze agent in the form of the free acid or preferably as one of its salts, e.g. the sodium, potassium, lithium or ammonium salt. A preferred antifreeze agent thus contains 0.1 to 5%, for example 0.3 to 2%, based on the weight of the alcohol component, of sodium cinnamate.

The antifreeze agent of the invention contains a salt of boric acid, preferably a tetraborate, such as borax $Na_2B_4O_7$, $10H_2O$, or the corresponding lithium, potassium or ammonium salt, or a metaborate, such as sodium or potassium metaborate. The sodium salts will usually be preferred on the grounds of expense. The borax content may range from 0.5 to 3% based on weight of the alcohol component. Mixtures of a tetraborate and a metaborate can alternatively be used.

An optional ingredient is an alkali metal or ammonium hydroxide, in an amount of 0 to 1%, preferably 0.01 to 0.5%, based on the weight of the alcohol component. By incorporating a small amount of an alkali metal or ammonium hydroxide in the antifreeze agent, it is possible to increase its reserve alkalinity without significantly increasing the solids content.

Another component is a polycyclic heterocyclic copper corrosion inhibitor of the general formula

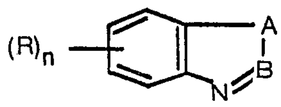

(I)

in which R is selected from alkyl, alkoxy, and nitro, n is 0, 1, 2, 3 or 4, A represents —O—, —NH—, or —NR'—, R' represents optionally substituted alkyl, and B represents =CH— or =N—. Examples of suitable compounds of formula (I) include benzotriazole and tolyltriazole.

Other compounds of formula (I) include benzimidazole, benzotriazole, 4-methylbenzimidazole and 5,6-dimethylbenzimidazole.

Another component is an alkali metal or ammonium nitrite, e.g. sodium or potassium nitrite, which is present in an amount of from 0.05 to 0.3% based on the weight of the alcohol component.

The preferred nitrates are sodium nitrate and potassium nitrate.

The antifreeze agent of the present invention can be prepared in any convenient manner, preferably by admixing with the alcohol component the specified additives in the amounts indicated. Preferably the antifreeze agent comprises at least 85%, and usually at least 95% up to 99.38% of the alcohol component; it may further comprise a small amount, for example, less than about 5% by weight, of water, based upon the weight of the alcohol component. Such small amounts of water may assist in solubilising some of the additives.

As examples of suitable antifoam agents there may be mentioned silicone oils, polyglycols (e.g., polyoxypropylene glycols of molecular weight about 950 to 1950 which have been reacted with ethylene oxide to give copolymers containing up to about 30% by weight of ethylene oxide residues), mineral oils, *iso*-octanol, $C_6$ to $C_{12}$ alcohols (e.g, $C_7$ to $C_9$ Oxo alcohols), organic phosphates, alkyl lactates and castor oil soaps. Such antifoam agents may be added, for example, in amounts of from 0.005 to 0.05%, based on the weight of the alcohol component.

The amounts of boric acid salt and of alkali metal hydroxide or ammonium hydroxide are so chosen that the pH of a 25 vol.% solution in distilled water of the antifreeze agent lies in the range of from 7.5 to 8.5. Moreover the agent is so formulated that its solids content is less than 5% by weight, based on the weight of the alcohol component and preferably so that its reserve alkalinity is at least 15.

The antifreeze agents of the present invention are suitable for use as, for example, 10 to 60 vol.% aqueous solutions in the cooling systems of internal combustion engines. Usually they will be utilised as 20 to 33 vol% aqueous solutions for this purpose. They can also be used in domestic and other circulating water central heating systems as well as in other equipment.

The invention is further illustrated in the following Examples. In these Examples the results were obtained using the glassware test apparatus described in BS 5117:197 "Methods of Test for Corrosion Inhibition Performance of Antifreeze Solutions" published by British Standards Institution, 2 Park Street, London W1A 2BS.

## Example 1

An antifreeze agent was prepared by admixing with 100 parts by weight of ethylene glycol (ethanediol) the following constituents:

| Constituent | Parts by weight |
|---|---|
| Borax decahydrate | 2.5 |
| Sodium nitrite | 0.15 |
| Benzotriazole | 0.15 |
| Cinnamic acid | 1.32 |
| Caustic Soda | 0.40 |
| Disodium metasilicate pentahydrate | 0.20 |

Upon testing in the glassware test (BS 5117:1974) the mean weight loss per specimen at 20 vol.%, 25 vol.%, and $33\frac{1}{3}$ vol.% (diluted with standard test water) was as shown in Table 1. After testing the specimens were chemically cleaned, prior to weighing, in order to remove adhered corrosion products.

TABLE 1

| | Copper | Solder | Brass | Mild steel | Cast iron | Cast aluminium |
|---|---|---|---|---|---|---|
| 20 vol % | 1.0mg | 1.5mg | 1.5mg | 1.0mg | 1.0mg | 2.5mg |
| 25 vol % | 1.0mg | 1.0mg | 0.0mg | 1.0mg | 1.0mg | 1.5mg |
| $33^1/_3$ vol % | 2.0mg | 0.5mg | 0.0mg | 2.0mg | 1.5mg | 2.5mg |

The antifreeze agent of this Example has a solids content of 4.72% and showed a "reserve alkalinity" of over 15. For comparison an antifreeze composition of the type described in GB—A—945638 was made up having a solids content of 4%; this had the following composition:

| Constituent | Parts by weight |
|---|---|
| Ethylene glycol | 100 |
| Borax decahydrate | 1 |
| Potassium nitrate | 0.3 |
| Sodium nitrite | 0.35 |
| Sodium benzoate | 2.25 |
| Sodium metasilicate | 0.03 |
| Benzotriazole | 0.07 |

The "reserve alkalinity" of this composition was 9.5. "Reserve alkalinity" is defined (according to B.S. 5117:1974) as the number of millilitres of 0.1.N. hydrochloric acid required for titration of 10 ml of concentrated antifreeze, or its equivalent, to a pH value of 5.5. Usually a 10 ml sample of antifreeze is diluted to 100 ml with distilled water prior to titration.

Example 2

Three antifreeze agents (hereafter called, A, B and C), were prepared each by adding to 100 parts by weight of ethylene glycol the following ingredients:

| Constituent | Parts by weight |
|---|---|
| Borax decahydrate | 2.5 |
| Sodium nitrite | 0.15 |
| Benzotriazole | 0.15 |
| Cinnamic acid | 1.32 |
| Disodium metasilicate pentahydrate | 0.1 |
| Caustic soda | x* |

(*See Table 2 below)

These agents gave rise to the results listed in Table 2 upon testing according to the glassware test (BS 5117:1974) at $33\frac{1}{3}$ vol% (i.e. $33\frac{1}{3}$ vols. agent mixed with $66\frac{2}{3}$ vols. standard test water).

TABLE 2

| Agent | x | Weight loss per specimen in mg. | | | | | | pH |
|---|---|---|---|---|---|---|---|---|
| | | Copper | Solder | Brass | Mild steel | Cast iron | Cast aluminium | |
| A | 0.35 | 0 | 2 | 1 | +2 | 1 | 2 | 7.8 |
| B | 0.40 | 1 | 0 | 1 | 0 | 0 | 1 | 7.85 |
| C | 0.50 | 1 | 2 | 0 | +2 | 1 | 0 | 8.0 |

All specimens were chemically cleaned to remove adherent corrosion products prior to weighing. A plus sign (+) in front of a reading indicates a weight gain. Each of agents A to C had a "reserve alkalinity" of more than 15 despite having solids contents (based on ethylene glycol) of only 4.57%, 4.62% and 4.67% respectively.

Example 3

Two antifreeze agents (hereafter called D and E) were made by adding to 100 parts by weight of ethylene glycol the following ingredients:—

| Constituent | Parts by weight |
|---|---|
| Borax decahydrate | 2.5 |
| Sodium nitrite | 0.15 |
| Benzotriazole | 0.15 |
| Cinnamic Acid | 1.32 |
| Disodium metasilicate pentahydrate | y** |

(** See Table 3 below)

These 3 antifreeze agents were subjected to the glassware test of BS 5117:1974 and gave the results listed in Table 3 at 15 vol.% (i.e. 15 vols. of agent diluted with 85 vols. standard test water).

TABLE 3

| Agent | y | Weight loss in mg per specimen | | | | | |
|---|---|---|---|---|---|---|---|
| | | Copper | Solder | Brass | Mild steel | Cast iron | Cast aluminium |
| D | 0.32 | 0 | 2 | 1 | +1 | 0 | 0 |
| E | 0.20 | 1 | 2 | 2 | 0 | 2 | 13 |

Both agents D and E had a "reserve alkalinity" of more than 15, despite a solids content (based on the weight of ethylene glycol) of only 4.44% and 4.32% respectively.

Example 4

An antifreeze agent is prepared according to the directions given in Example 1 except that the 0.15 parts by weight of benzotriazole is replaced by 0.15 parts by weight of tolyltriazole. Similarly good results are obtained.

## Claims

1. An antifreeze agent comprising a water-soluble alcohol component, a metasilicate salt, an *alpha, beta*-ethylenically unsaturated compound, a salt of boric acid, a heterocyclic copper corrosion inhibitor, and an alkaline material characterised in that it contains the following percentages by weight (all with reference to the alcohol component) of the following substances:

(a) 0.02 to 1% alkali metal or ammonium metasilicate (calculated as pentahydrate);

(b) 0.3 to 2% alkali metal salt or ammonium salt of an aromatic substituted *alpha, beta*-ethylenically unsaturated carboxylic acid;

(c) 0.5 to 3% alkali metal or ammonium salt of boric acid;

(d) 0 to 0.5% alkali metal or ammonium hydroxide;

(e) 0.05 to 0.15% polycyclic heterocyclic copper corrosion inhibitor of the general formula

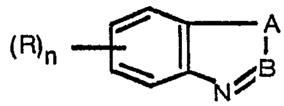

(I)

in which R is selected from alkyl, alkoxy, and nitro, n is 0, 1, 2, 3 or 4, A represents —O—. —NH— or —NR'—, R' represents optionally substituted alkyl, and B represents =CH— or =N—,

(f) 0.05 to 0.3% alkali metal or ammonium nitrite and

(g) 0 to 1% alkali metal or ammonium nitrate and that the amounts of components (c) and (d) are selected so that the pH of a 25 wt% solution in water of the antifreeze agent lies in the range of from 7.5 to 8.5.

2. An antifreeze agent according to claim 1, wherein there is included one or more of the following ingredients:

a minor amount of an amine or amino acid;

a minor amount of sodium benzoate;

a minor amount of a dye;

a minor amount of an antifoam agent.

3. An antifreeze agent according to claim 1 or claim 2 wherein the water-soluble alcohol component comprises ethylene glycol.

4. An antifreeze agent according to any one of claims 1 to 3, which contains from 0.1 to 0.3% of sodium metasilicate, based on the weight of the alcohol component, calculated as pentahydrate.

5. An antifreeze agent according to any one of claims 1 to 4, wherein the aromatic $\alpha,\beta$-ethylenically unsaturated carboxylic acid is cinnamic acid.

6. An antifreeze agent according to claim 5, which contains from 0.3 to 2%, based on the weight of the alcohol component of sodium cinnamate.

7. An antifreeze agent according to any one of claims 1 to 6, which contains from 1 to 3%, based on the weight of the alcohol component, of borax.

8. An antifreeze agent according to any one of claims 1 to 7, which contains from 0.05 to 0.3%, based on the weight of the alcohol component, of sodium or potassium nitrite.

9. An antifreeze agent according to any one of claims 1 to 8, which contains from 0.05 to 0.15%, based on the weight of the alcohol component, of benzotriazole.

10. An antifreeze agent according to any one of claims 1 to 9, which contains from 0.01 to 0.05%, based on the weight of the alcohol component, of sodium hydroxide or potassium hydroxide.

## Revendications

1. Antigel, comprenant un constituant alcool hydrosoluble, un sel de type métasilicate, un composé à insaturation éthylénique en alpha-bêta, un sel de l'acide borique, un inhibiteur hétérocyclique de la corrosion du cuivre et une matière alcaline, antigel caractérisé en ce qu'il contient les pourcentages pondéraux suivants (tous se référant au constituant alcool) des substances suivantes:

(a) 0,02 à 1 % de métasilicate de métal alcalin ou d'ammonium (calculé en pentahydrate);

(b) 0,3 a 2 % d'un sel de métal alcalin ou d'ammonium d'un acide carboxylique à substituant aromatique et à insaturation éthylénique en alpha-bêta;

(c) 0,5 à 3% d'un sel de métal alcalin ou d'ammonium de l'acide borique;

(d) 0 à 0,5% d'un hydroxyde de métal alcalin ou d'ammonium;

(e) 0,05 à 0,15 % d'un inhibiteur hétérocyclique polycyclique de corrosion du cuivre, de formule générale:

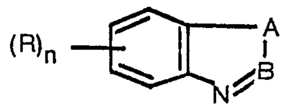

(I)

(dans laquelle R est choisi parmi un groupe alkyle, alcoxy et nitro; *n* vaut 0,1,2,3 ou 4; A représente —O—, —NH— ou —NR'—; R' représente un groupe alkyle éventuellement substitué; et B représente =CH— ou =N—),

(f) 0,05 à 0,3 % d'un nitrite de métal alcalin ou d'ammonium, et

(g) 0 à 1 % de nitrate de métal alcalin ou d'ammonium, et en ce que les quantités des constituants (c) et (d) sont choisies de manière que le pH d'une solution à 25 % en poids de l'antigel dans de l'eau se situe entre 7,5 et 8,5.

2. Antigel selon la revendication 1, comportant un ou plusieurs des ingrédients suivants:
une quantité mineure d'une amine ou d'un amino acide;
une quantité mineure de benzoate de sodium;
une quantité mineure d'un colorant;
une quantité mineure d'un agent anti-mousse.

3. Antigel selon la revendication 1 ou la revendication 2, dans lequel le constituant alcool hydrosoluble est ou comprend de l'éthylène glycol.

4. Antigel selon l'une quelconque des revendications 1 à 3, qui contient de 0,1 à 0,3 % de métasilicate de sodium, calculé en pentahydrate, par rapport au poids du constituant alcool.

5. Antigel selon l'une quelconque des revendications 1 à 4, dans lequel l'acide carboxylique aromatique à instaturation éthylénique en alpha-bêta est l'acide cinnamique.

6. Antigel selon la revendication 5, qui contient de 0,3 à 2% (par rapport au poids du constituant alcool) de cinnamate de sodium.

7. Antigel selon l'une quelconque des revendications 1 à 6, qui contient de 1 à 3 % (par rapport au poids du constituant alcool) de borax.

8. Antigel selon l'une quelconque des revendications 1 à 7, qui contient de 0,05 à 0,3 % (par rapport au poids du constituant alcool) de nitrite de sodium ou de potassium.

9. Antigel selon l'une quelconque des revendications 1 à 8, qui contient de 0,05 à 0,15 % (par rapport au poids du constituant alcool) de benzotriazole.

10. Antigel selon l'une quelconque des revendications 1 à 9, qui contient de 0,01 à 0,05 % (par rapport au poids du constituant alcool) d'hydroxyde de sodium ou d'hydroxyde de potassium.

**Patentansprüche**

1. Gefrierschutzmittel, das eine wasserlösliche Akoholkomponente, ein Metasilikatsalz, eine alpha-beta-äthylenisch ungesättigte Vergindung, ein Salz der Borsäure, einen heterozyklischen Kupferkorrosionsinhibitor und ein Alkalimaterial aufweist, dadurch gekennzeichnet, daß es die folgenden Gewichtsprozente (alle bezogen auf die Alkoholkomponente) der folgenden Substanzen enthält:

a) 0,02 bis 1% Alkalimetall — oder Ammoniummetasilikat (berechnet als Pentahydrat);

b) 0,3 bis 2% Alkalimetallsalz oder Ammoniumsalz einer aromatisch substituierten alpha-beta-äthylenisch ungesättigten Karbonsäure;

c) 0,5 bis 3% Alkalimetall- oder Ammoniumsalz der Borsäure;

d) 0 bis 0,5% Alkalimetall- oder Ammoniumhydroxid;

e) 0,05 bis 0,15% polyzyklischer, heterozyklischer Kupferkorrosions-inhibitor der allgemeinen Formel

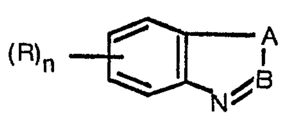

(I)

wobei R aus Alkyl, Alkoxy und Nitro gewählt ist, n 1, 2, 3 oder 4 ist, A —O—, —NH— oder —NR'— darstellt, R' gegebenenfalls substituiertes Alkyl darstellt und B =CH— oder =N— darstellt;

f) 0,05 bis 0,3% Alkalimetall- oder Ammoniumnitrit und

g) 0 bis 1% Alkalimetall- oder Ammoniumnitrat und daß die Mengen der Komponenten c) und d) so ausgewählt sind, daß der pH-Wert einer 25 Gew.%-Lösung in Wasser des Gefrierschutzmittels im Bereich von 7,5 bis 8,5 liegt.

2. Gefrierschutzmittel nach Anspruch 1, dadurch gekennzeichnet, daß einer oder mehrere der folgenden Zusätze enthalten sind:
eine geringe Menge eines Amins oder
einer Aminosäure;

eine geringe Menge von Natriumbenzoat;
eine geringe Menge eines Farbstoffes;
eine geringe Menge eines Entschäumers.

3. Gefrierschutzmittel nach Anspruch 1 oder 2, dadurch gekennzeichnet, daß die wasserlösliche Alkoholkomponente Äthylenglykol enthält.

4. Gefrierschutzmittel nach einem der Ansprüche 1 bis 3, dadurch gekennzeichnet, daß es von 0,1 bis 0,3% Natriummetasilikat enthält, auf der Basis des Gewichtes der Alkoholkomponente, berechnet als Pentahydrat.

5. Gefrierschutzmittel nach einem der Ansprüche 1 bis 4, dadurch gekennzeichnet, daß die aromatische, alpha- beta-äthylenisch ungesättigte Karbonsäure Zimtsäure ist.

6. Gefrierschutzmittel nach Anspruch 5, dadurch gekennzeichnet, daß es von 0,3 bis 2% Natriumcinnamat enthält, auf der Basis des Gewichtes der Alkoholkomponente.

7. Gefrierschutzmittel nach einem der Ansprüche 1 bis 6, dadurch gekennzeichnet, daß des von 1 bis 3% Borax enthält, auf der Basis des Gewichtes der Alkoholkomponente.

8. Gefrierschutzmittel nach einem der Ansprüche 1 bis 7, dadurch gekennzeichnet, daß es von 0,05 bis 0,3% Natrium- oder Kaliumnitrit enthält, auf der Basis des Gewichtes der Alkoholkomponente.

9. Gefrierschutzmittel nach einem der Ansprüche 1 bis 8, dadurch gekennzeichnet, daß es von 0,05 bis 0,15% Benzotriazol enthält, auf der Basis des Gewichtes der Alkoholkomponente.

10. Gefrierschutzmittel nach einem der Ansprüche 1 bis 9, dadurch gekennzeichnet, daß es von 0,01 bis 0,05 % Natriumhydroxid oder Kaliumhydroxid enthält, auf der Basis des Gewichtes der Alkoholkomponente.